# EUROPEAN PATENT APPLICATION

(11) **EP 1 191 420 A2**
(43) Date of publication of application: **27.03.2002**
(21) Application number: 01302368.4
(22) Date of filing: 14.03.2001
(51) Int. Cl.: G06F 1/00

(54) **Method of distributing software**

(30) Priority: 20.09.2000 JP 2000285770
(71) Applicant: FUJITSU LIMITED, Kawasaki-shi, Kanagawa 211-8588 (JP)
(72) Inventor: Sasaki, Takaoki, Fujitsu Basic Software Corp., Tokyo 108-8531 (JP); Kanou, Ryohei, Fujitsu Basic Software Corp., Tokyo 108-8531 (JP); Akiyama, Ryota, Nakahara-ku, Kawasaki, Kanagawa 211-8588 (JP)
(74) Representative: Hitching, Peter Matthew

(57) **Abstract**

One of a plurality of users purchases a PC card in which software is included from a distributor of communication software or a seller of PC cards. This purchaser informs a non-purchaser through a safe channel such as off-line of a key for encryption, a URL of the site from which to download the software and a retrieval induction code. The non-purchaser accesses the distributor of communication software, etc., via a network using the URL, key and retrieval induction code, downloads the software corresponding to the software that the purchaser owns, and executes cipher communications or a competition game with the purchaser. The distributor of software or the seller of PC cards pays the purchaser who satisfies certain conditions based upon the contents registered in the user management database.

## Description

This invention relates to a method of distributing software such as encrypting software.

The present description relates mainly to a method of distributing encrypting software, but this method can also be applied to other software.

In a conventional method of distributing or using encrypting software, when a user encrypts a file using encrypting software and communicates with the other party using a file attached to communication software, the other party who has not yet purchased the same software and who receives the encrypted file has to decrypt it using one of the following conventional methods.
1. The user has the other party purchase the same software, and both parties share a cipher key and information for making the key.
2. Both parties share a cipher key and information for making the key by inputting a specified URL and downloading decrypting software on the Web.
3. The user sends dedicated decrypting software that already includes a common key and self-decrypting software to the other party as an attached file.

In the case of item 1 of the above paragraph, a user has to purchase encrypting software only once, but whenever the user changes the other party with whom one communicates, the user has to determine information about the mutual cipher with a new party, thus making it possible to use the cipher without authority by copying it.

In the case of item 2 above, the user has to purchase encrypting software only once, but the supplier of said software sometimes supplies, free of charge, said software whose functionality has been deteriorated. In this case, whenever the user changes the other party with whom the user communicates, the user has to determine information about the mutual cipher with a new party, thus making it possible to use the cipher without authority by copying it.

In the case of item 3 above, the user can provide the other party, free of charge, with software dedicated for decrypting, but the other party cannot send encrypted data. If this is the case, a corporation that provides a cipher communication service cannot earn any income except where users purchase encrypting software, regardless of which method mentioned above is adopted. Therefore, there is such a problem that the corporation that provides a cipher communication service cannot earn any reward from the service of encrypting a file and sending it safely to the other party.

Also, in the case of other software, a corporation that provides encrypting software cannot earn any income except where users purchase the software.

An aim of the invention is to enable software to be distributed safely, to enable a corporation to earn a reward for the service ensuring the safety of the use of the software, and to provide a method for promoting the spread of the software among a large number of customers.

The method for distributing software in the mode for implementing the invention is a method in which a first user who licenses the software to a second user distributes the software required for the processing to a second user, and the above-mentioned method is characterized in that it is provided with both the first step for distributing said software to a first user together with at least a code that identifies said software and the second step for distributing to a second user the same software as said software that is identified by the code of which the first user informs the second user.

If this invention is used, the first user can safely communicate with only the second user with whom the first user wants to communicate. In other words, no one other than the first and second users can intercept the communication taking place between the first user and the second user. Therefore, it is possible to communicate in with a high degree of secrecy by using the software distributed in such a manner as mentioned above.

In particular, it is possible to communicate far more safely by applying the method of this invention to cipher communications. Since software can be safely distributed, this promotes the use of the software distribution method of this invention and acquires the confidence of the users, thus causing the use of the method of this invention to be further promoted. In addition, an even more beneficial system can be provided by paying some amount of money to the users of the mode for realizing this invention.

The invention also provides a computer program and a computer program product for carrying out any of the methods described herein, and a computer readable medium having stored thereon a program for carrying out any of the methods described herein.

Preferred features of the present invention will now be described, purely by way of example, with reference to the accompanying drawings, in which:-
Fig. 1 is a diagram showing a general processing sequence of an embodiment of this invention.
Fig. 2 is a diagram showing the processing sequence of communications performed between a user A who has purchased a PC card (hereinafter called purchaser A) and a user B who has not purchased a PC card (hereinafter called non-purchaser B).
Fig. 3 is a diagram showing cipher communications performed between non-purchasers.
Fig. 4 is a diagram showing cipher communications performed between a non-purchaser and a plurality of purchasers.
Fig. 5 is a diagram showing another configuration used for cipher communications performed between a non-purchaser and a plurality of purchasers.
Fig. 6 is a diagram showing the method for using software for signature and certification.
Fig. 7 is a diagram showing the method for distributing software for competition games.
Fig. 8 is a diagram showing the processing sequence of the mode for implementing the invention and access to a database (No. 1).
Fig. 9 is a diagram showing the processing sequence of the mode for implementing the invention and access to a database (No. 2).
Fig. 10 is a diagram showing the processing sequence of the mode for implementing the invention and the access to a database (No. 3).
Fig. 11 is a diagram showing the sequence in which a user purchases a hardware module from a seller who sells and manages PC cards.
Fig. 12 is a diagram showing the procedure for starting communications (No. 1).
Fig. 13 is a diagram showing the procedure for starting communications (No. 2).
Fig. 14 is a diagram showing the procedure for supplementing a retrieval induction code.
Fig. 15 is a diagram showing the certification process at the time a purchaser transmits data to a non-purchaser.
Fig. 16 is a diagram showing the certification process at the time a non-purchaser transmits data to a purchaser.
Fig. 17 is a diagram showing the certification process at the time a non-purchaser C transmits data to a non-purchaser B.
Fig. 18 is a diagram showing the certification process at the time communications are performed between both parties who have purchased a PC card.
Fig. 19 is a diagram showing a summary of the certification of encrypted data.
Fig. 20 is a diagram showing the method for making and using a secret key (No. 1).
Fig. 21 is a diagram showing the method for making and using a secret key (No. 2).
Fig. 22 is a diagram showing the method for making and using a secret key (No. 3).
Fig. 23 is a diagram showing the method for making and using a secret key (No. 4).
Fig. 24 is a diagram showing the method for making and using a secret key (No. 5).
Fig. 25 is a diagram showing the method for making and using a secret key (No. 6).
Fig. 26 is a flowchart showing the processing sequence at the time when a non-purchaser downloads dedicated software.
Fig. 27 is a flowchart showing the process in which a purchaser charges a retrieval induction code to a PC card.

When a purchaser who has purchased a PC card which stores software wants to safely communicate with a non-purchaser who has not purchased it, this invention makes it possible to obtain dedicated software by handing the retrieval induction code attached to the PC card and the URL of a person who supplies the software to another person. The retrieval induction card is purchased from the person who supplies the software and is thereby supplemented.

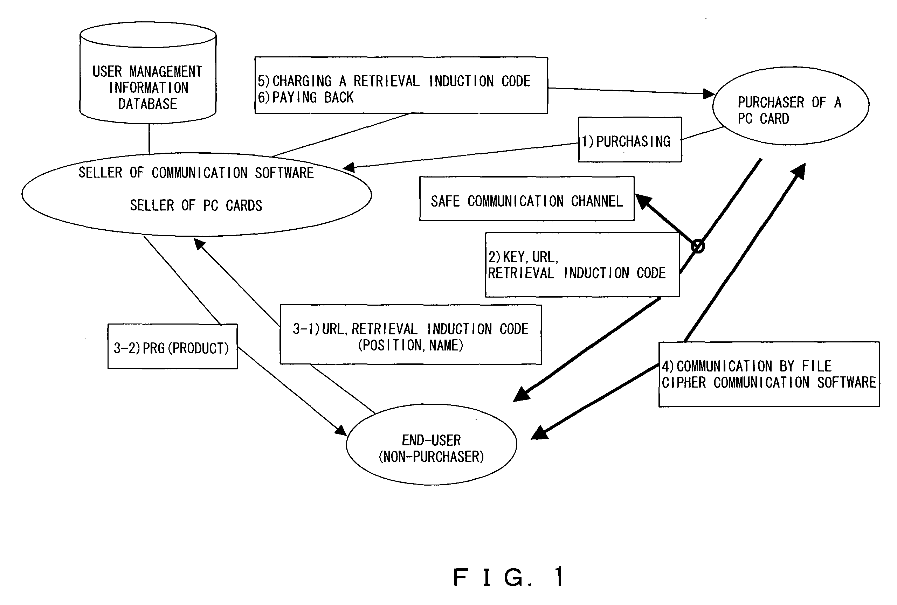

Fig. 1 is a diagram showing a general processing sequence of the mode for implementing the invention.

First, a user purchases a PC card in step 1). Though it is stated here that a user purchases a PC card, he also purchases formail software, a retrieval induction code and a URL in addition to the PC card.

Then, the user contacts a non-purchaser in step 2). At that time the user who has purchased a retrieval induction code and a URL informs the non-purchaser of the retrieval induction code and the URL. Since sellers of the retrieval induction code sell it as a table in the form of seal, the purchaser can peel off the seal and hand the retrieval induction code over to the non-purchaser. When the non-purchaser has received the retrieval induction code, he can obtain dedicated formail software corresponding to the retrieval induction code. As the method for obtaining dedicated formail software, there is, for example, a method for downloading from the URL that the non-purchaser has received from the purchaser. Also, the purchaser presents a different retrieval induction code to each non-purchaser. A software provider constructs a server in such a way that even if the purchaser hands the same retrieval induction code to a plurality of non-purchasers, only one dedicated formail software program for one retrieval induction code can be obtained. Therefore, it is only one non-purchaser that has the right to download the formail software that can be downloaded by one retrieval induction code.

That is, the software is provided to the non-purchaser by the retrieval induction code in step 3). For example, the non-purchaser proceeds to the download window using the URL received from the purchaser in step 3-1) and inputs the retrieval induction code. Then, when the server certifies the non-purchaser by said input of the retrieval induction code, the non-purchaser begins to download the dedicated encryption software. Note that the server is configured in such a way that once a non-purchaser is certified by one retrieval induction code, the dedicated encrypting software cannot be downloaded by the same retrieval induction code again.

Next, in step 4), the purchaser and the non-purchaser communicate using the dedicated formail software for encrypting downloaded by the retrieval induction code that was provided from the purchaser to the non-purchaser. The dedicated formail software is used with a cipher key that has already been set. Or, a cipher key that both the purchaser and the non-purchaser have mutually determined can be used.

If the purchaser has completely used the retrieval induction code because of having performed communications with a plurality of non-purchasers, the purchaser purchases retrieval induction codes from the seller of PC cards.

When the non-purchaser purchases a PC card, etc., from the seller of PC cards because he wants to use the same system as that of the purchaser after having communicated with the purchaser, the seller pays some amount of money back to said purchaser who purchased the PC card, etc., sometime ago, because the number of users has increased due to the introduction of said non-purchaser by said purchaser. Or, the seller pays back the purchasers who purchase a large number of retrieval induction codes.

In an embodiment of this invention, the purchaser of encrypting software including a hardware module (a PC card including hardware) transfers the right of use of the software including a retrieval induction code to the other party (non-purchaser), thus making it possible to obtain from said right the dedicated software that can be used only between the purchaser and the non-purchaser. Since a cipher key is determined from a retrieval induction code, the purchaser and the non-purchaser do not need to determine the information about the cipher between them in advance. This software can be used only with the same party, and becomes unusable at a certain fixed time. The software for each individual party with whom the purchaser communicates is obtained from a new retrieval induction code. The retrieval induction code whose number has been determined in advance is set in a hardware module for the purchaser who purchases the encrypting software with a hardware module, and said code is additionally set in the hardware module where a wire is not required. Said code is additionally purchased by the purchaser. The purchaser earns a reward for receiving the service of encrypting a file and sending the encrypted file to the other party.

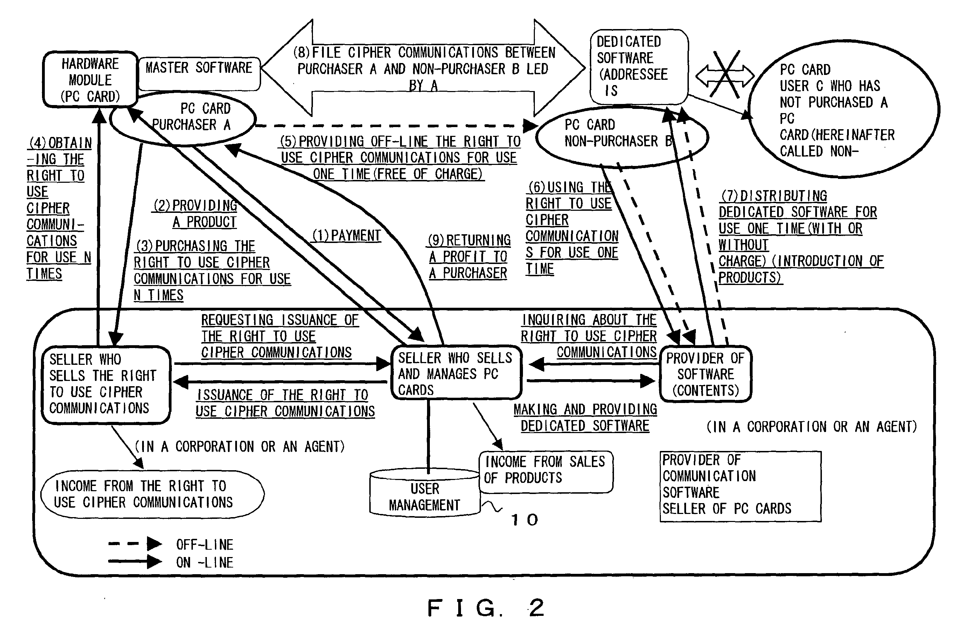

Fig. 2 is a diagram showing the processing sequence of communications performed between purchaser A and purchaser B.

First, purchaser A pays the price of a PC card, etc., to the seller who sells and manages PC cards, and purchases a hardware module from the seller in steps (1) and (2). The seller who sells and manages PC cards stores user data in a user management database 10 in order to manage users who have purchased PC cards. Said seller earns an income by selling PC cards, etc.

Purchaser A purchases the right to use cipher communications that uses a hardware module, for use N times, from the seller who sells the right to use cipher communications in step (3), while said seller earns an income from selling the right to use cipher communications in step (4). Then, purchaser A provides off-line non-purchaser B with the right to use cipher communications for use one time, for example, by providing a retrieval induction code to the non-purchaser in step (5). In steps (6) and (7), non-purchaser B downloads or obtains off-line the dedicated software for cipher communications from a software provider, with a charge or without a charge, using said right obtained from purchase A. Then, purchaser A performs cipher communications with non-purchaser Busing this dedicated software for cipher communications . The seller who sells and manages PC cards pays back to purchaser A when a certain number of conditions are satisfied.

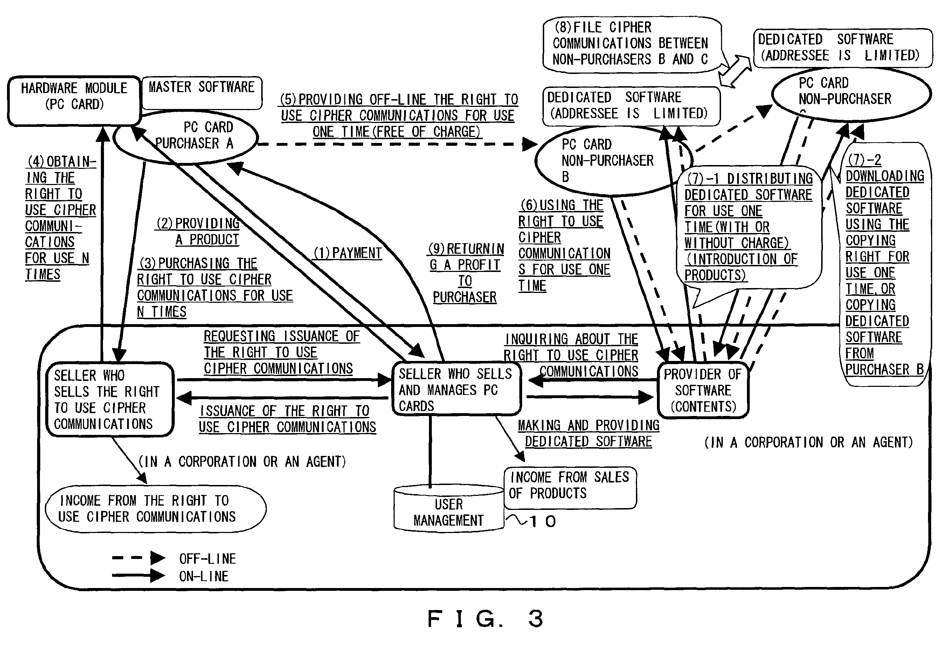

Fig. 3 is a diagram showing cipher communications performed between non-purchasers.

In the case of this diagram, purchaser A purchases the right to use cipher communications and grants said right to non-purchasers B and C, thereby allowing both the non-purchasers to execute cipher communications between them.

First, purchaser A who has purchased a PC card purchases a hardware module from the seller who sells and manages PC cards, and pays for it, as shown in steps (1) and (2). Then, purchaser A purchases the right to use cipher communications for use N times from the seller who sells the right to use cipher communications, as shown in steps (3) and (4). Next, purchaser A grants off-line said right of use one time to non-purchaser B, as shown in step (5). Non-purchaser B, by using said right of use one time, downloads the dedicated software for cipher communications with a charge or without a charge using said right granted by the distributor of the software (contents), or receives off-line the provision of the dedicated software, as shown in steps (6) and (7)-1. At that time, in order for non-purchaser B to perform cipher communications with non-purchaser C, non-purchaser B sets the right to copy the dedicated software so that non-purchaser C can obtain the same PC card. The copy right is set for the code for copying and the number of copies. Non-purchaser B transfers this copy right off-line to non-purchaser C. In practice, non-purchaser B provides the code for copying the dedicated software to non-purchaser C. Non-purchaser C receives the same dedicated software as that purchaser B obtained from the distributor of the software (contents) based upon the code received from non-purchaser B. As the method for non-purchaser C to receive the dedicated software, there is a method of downloading the dedicated software on-line or a method of receiving the dedicated software off-line. Or, non-purchaser C can have the dedicated software copied from that of non-purchaser B (step (7)-2).

In this way, non-purchaser B and non-purchaser C can execute cipher communications by obtaining the dedicated software for cipher communications (step (8)). On the other hand, the seller who sells and manages PC cards pays back purchaser A who has purchased a PC card based upon certain conditions that have been fixed in advance, as shown in step (9).

The seller who sells and manages PC cards manages the users who have purchased PC cards using a user management database 100 as explained in Fig. 2, and earns an income by selling PC cards. The seller who sells the right to use cipher communications earns an income by selling said right to purchasers who purchase PC cards.

The seller who sells the right to use cipher communications, the seller who sells and manages PC cards and the distributor who distributes the software (contents) exchange information amongst themselves. For instance, between the seller who sells the right to use cipher communications and the seller who sells and manages PC cards, the former requests the latter to issue said right, and the latter issues said right to the former. The seller who sells and manages PC cards requests the distributor of the software (contents) to make and provide the dedicated software. The distributor of the software (contents) inquires about said right to the seller who sells and manages PC cards.

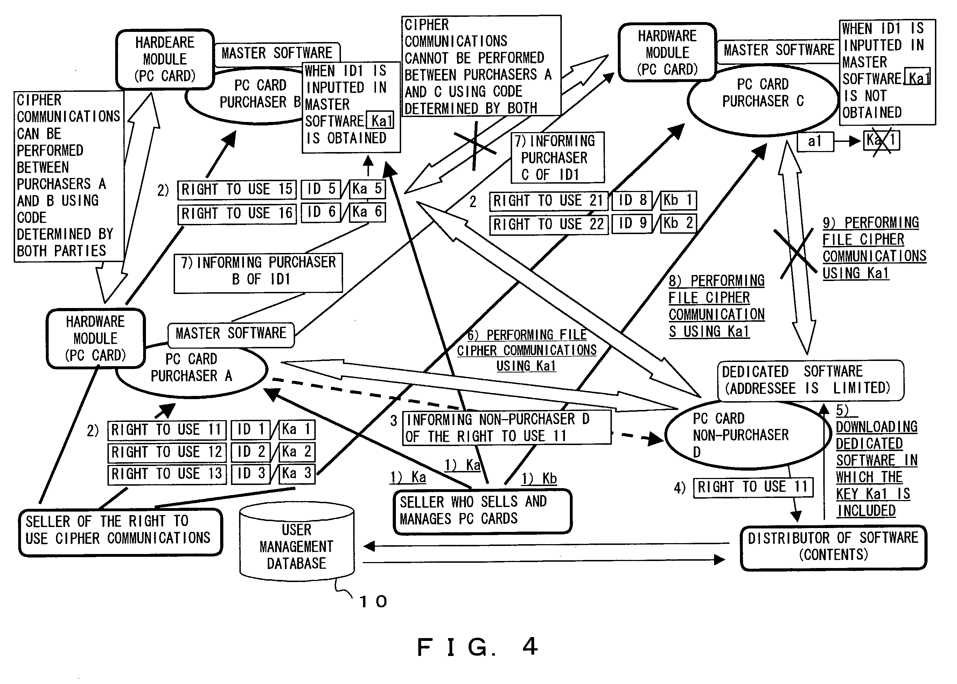

Fig. 4 is a diagram showing cipher communications performed between a non-purchaser and a plurality of purchasers.

First, PC card users A, B and C purchase hardware modules from the seller who sells and manages PC cards, as shown in step 1). A key, Ka and Kb, for making a secret key is set in the PC card. A key, Ka, for making a secret key is distributed to purchasers A and B who have purchased PC cards, and a key, Kb, for making a secret key is distributed to purchaser C who has purchased a PC card. The same key, Ka, for making a secret key is distributed to purchasers A and B by jointly purchasing PC cards. Purchasers A, B and C who have purchased PC cards purchase said right and an ID (identification) number corresponding to it from the seller who sells the right to use cipher communications, as shown in step 2). At that time, the purchasers receive the ID and a list of said rights or have the right and ID set in the PC card.

Next, purchaser A informs non-purchaser D of the right 11 and ID 1 in step 3). In step 4), non-purchaser D accesses the distributor of the software (contents) using said right and downloads the dedicated software in which the key Ka 1 is included, in step 5). Based upon the above processes, purchaser A and non-purchaser D can perform cipher communications, as shown in step 6). In step 7), purchaser A informs purchasers B and C of the ID number used for cipher communications with non-purchaser D so that non-purchaser D can communicate with the other purchasers. Purchaser B can obtain the key Ka 1 from the key Ka for making a secret key by setting the ID number that is sent by purchaser A to the dedicated software for cipher communications, so purchaser B can perform cipher communications with non-purchaser D. On the other hand, since purchaser C has purchased the dedicated software for cipher communications in which a different key, Kb, for making a secret key from that of purchaser A is set, purchaser C cannot obtain the cipher key, Ka 1, even if he is informed of the ID number by purchaser A. Therefore, purchaser C cannot perform cipher communications with non-purchaser D.

As has been explained above, a plurality of specified purchasers who have purchased PC cards can safely perform cipher communications with a non-purchaser who has not purchased a PC card. Also, the above-mentioned cipher key (key for ciphering and decihpering) can be made by encrypting an ID number using a key for making a secret key.

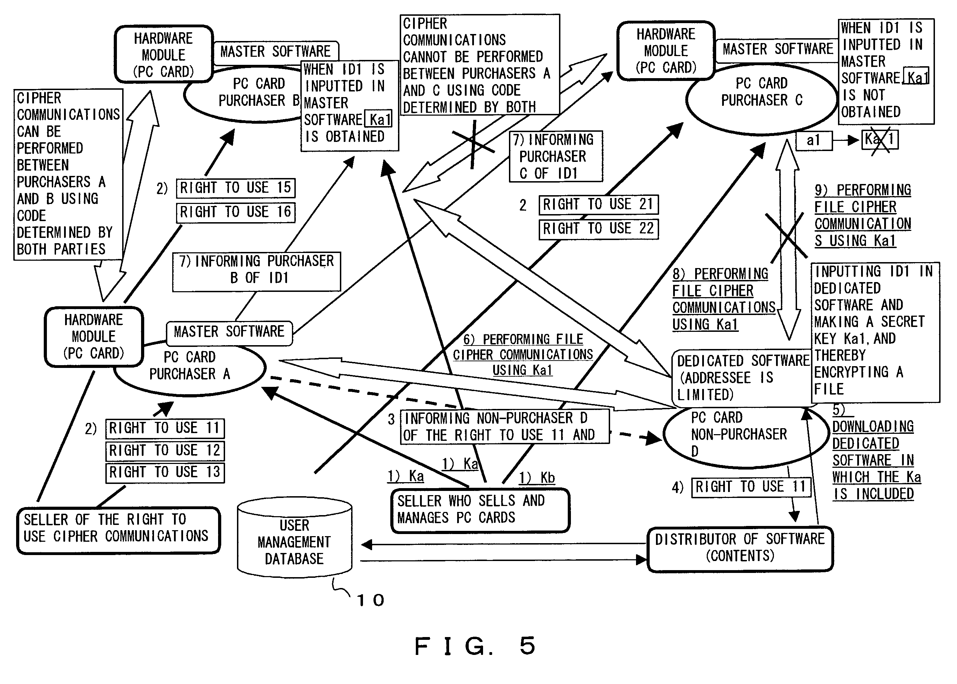

Fig. 5 is a diagram showing another configuration used for cipher communications performed between a non-purchaser and a plurality of purchasers. Purchasers A, B and C purchase PC cards in which the keys, Ka and Kb, for making a secret key are set by a seller who sells and manages PC cards in step 1). Note that purchasers A and B are supposed to purchase PC cards in which the same key, Ka, for making a secret key is set, and purchaser C is supposed to purchase a PC card in which the key, Kb, for making a secret key is set.

Next, all the purchasers A, B and C purchase said right from the seller who sells the right to use cipher communications in step 2). Then, they set said right for the PC cards. Or, they can have said right set in the PC cards, when purchasing said right. Purchaser A informs non-purchaser D off-line of said right 11 and the ID number 1 in step 3) so that purchaser A can perform cipher communications, first of all, with non-purchaser D. Non-purchaser D who has received said right and the ID 1 in steps 4) and 5) accesses the distributor of the software (contents) using said right and downloads the dedicated software in which the key, Ka, for making a secret key is included. Then, non-purchaser D makes the cipher key Ka 1 by inputting the ID 1 in this dedicated software. In this way purchaser A can perform cipher communications with non-purchaser D, as shown in step 6).

In step 7), purchaser A sends the ID 1 that is sent to non-purchaser D to purchasers B and C. Since the dedicated software for cipher communications that includes Ka as the key for making a secret key has been distributed to purchaser B, purchaser B can perform cipher communications with non-purchaser D using ID1 and Ka, as in step 8). But if the purchaser C has a piece of dedicated ciphering software in which a secret key generation key Kb is set, then he cannot generate a ciphering key to perform cipher communications with non-purchaser D, thereby he cannot perform cipher communications with non-purchaser D, as in step 9).

As a method of making a cipher key from an ID and a key for making a secret key, for instance, the method explained in Fig.4 can be used. Furthermore, in addition to the embodiment described in Fig. 4 and Fig. 5, two persons who communicate with each other can also establish a cipher key themselves to communicate with each other without allowing the dedicated software for cipher communications to have a key suitable for said right.

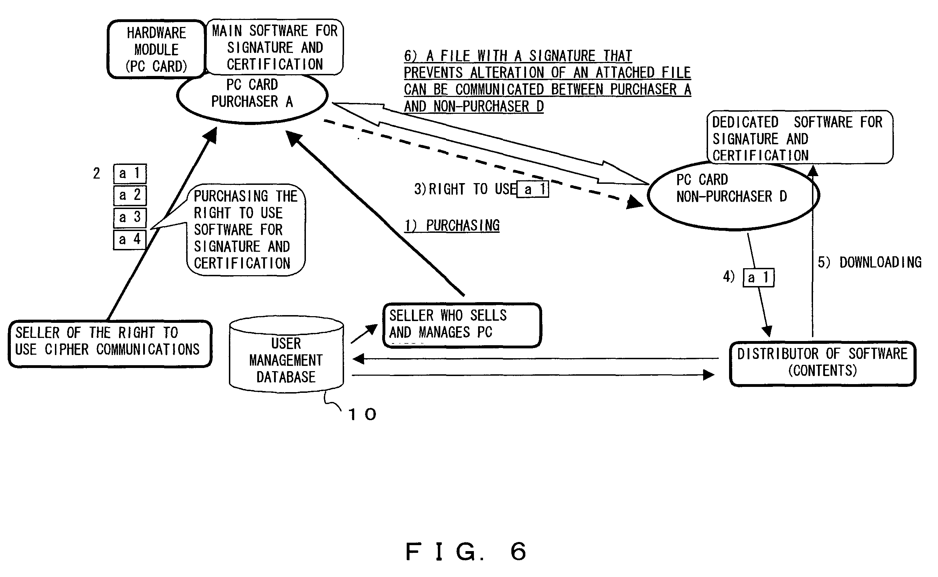

Fig. 6 is a diagram showing the method for using software for signature and certification.

First, purchaser A purchases a hardware module including a PC card from the seller who sells and manages PC cards in step 1). The seller who sells and manages PC cards manages the purchasers of PC cards using the user management database 10. Next, purchaser A purchases the rights to use the software for signature and certification from the seller who sells said rights in step 2). Then, purchaser A informs non-purchaser D off-line of one of said rights that purchaser A has purchased in step 3). Non-purchaser D accesses the distributor of the software using said rights in step 4), and downloads the dedicated software for signature and certification in step 5). Thus, a file with a signature that prevents alteration of an attached file can be communicated between purchaser A and non-purchaser D in step 6).

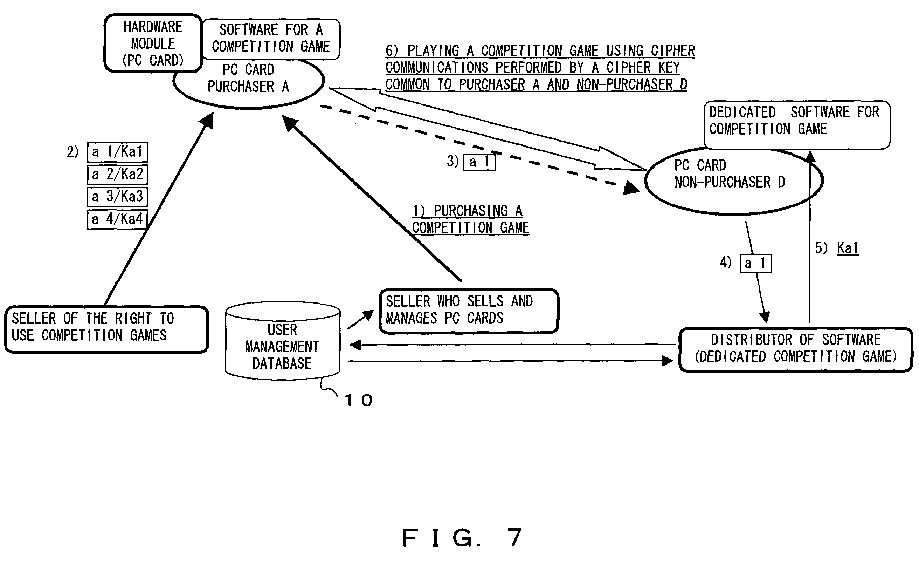

Fig. 7 is a diagram showing the method for distributing software for competition games.

First, purchaser A purchases a PC card that incorporates competition-game software from the seller who sells and manages PC cards in step 1). Purchaser A purchases the right to use the competition-game software from the seller who sell said rights in step 2), and sets a cipher key suitable for said right in the PC card. When purchaser A wants to play the game only with the non-purchaser D, purchaser A informs non-purchaser D off-line of one of said rights in step 3). Non-purchaser D accesses the distributor of the dedicated software for the competition game using said right of which purchaser A has informed non-purchaser D, and downloads the dedicated software for the competition game that has a cipher key suitable for said right in steps 4) and 5). Then, purchaser A and non-purchaser D can play the game using cipher communications performed by a cipher key common to both parties, as shown in step 6).

If this method is used, one can play a competition game with a specified person without having anyone else view the contents of the competition game.

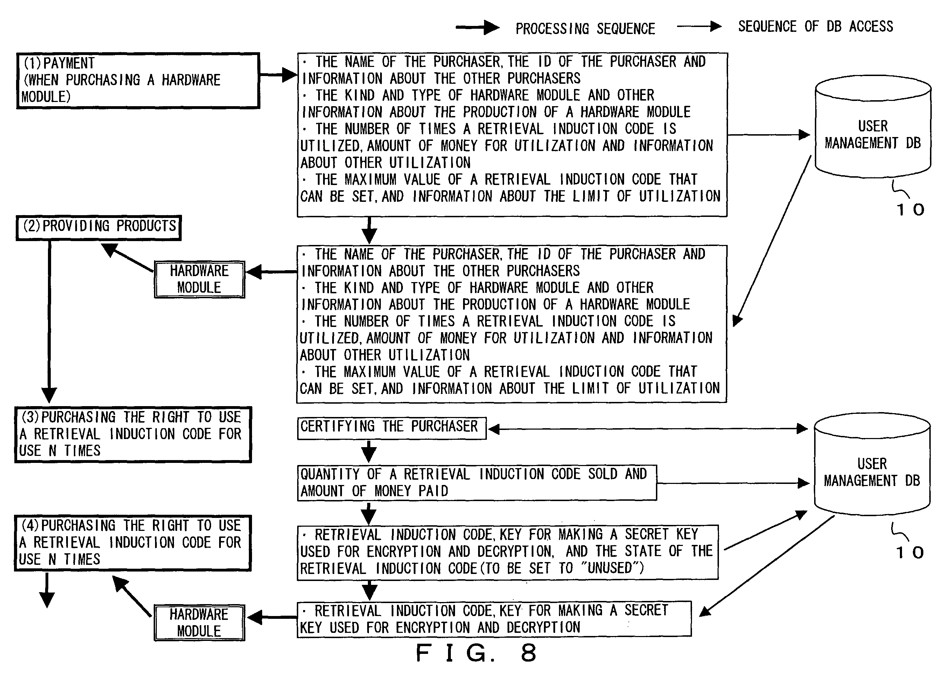

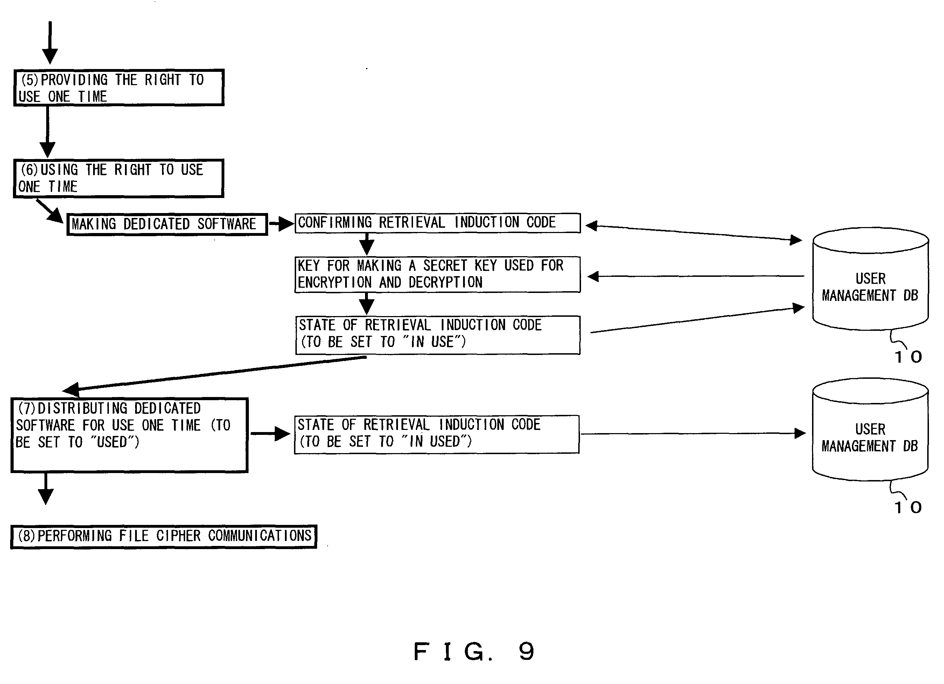

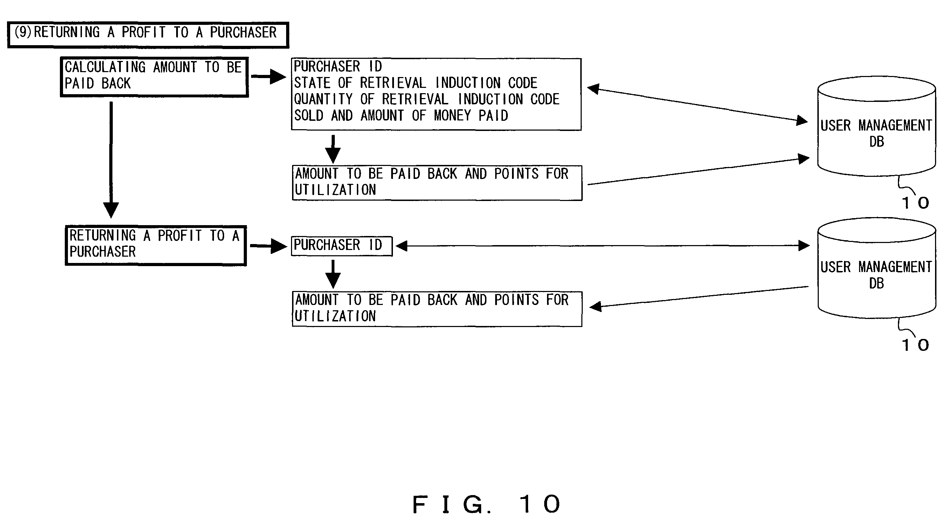

Fig. 8 to Fig. 10 are diagrams showing the processing sequence of the mode for implementing the invention and access to a database.

When a purchaser pays the seller who sells and manages PC cards, and purchases a hardware module in step (1), the purchaser registers the following information in the user management database:
- The name of the purchaser, the ID of the purchaser and information about other purchasers
- The kind and type of a hardware module and other information about the production of a hardware module
- The number of times a retrieval induction code is utilized, amount of money for utilization and information about other utilization
- The maximum value of a retrieval induction code that can be set, and information about the limit of utilization

The seller who sells and manages PC cards provides the purchaser with a hardware module (including a PC card) in step (2) based upon the above data. Next, the purchaser purchases said right for use N times in step (3) . At that time, the seller who sells said right accesses the user management database 10 to certify the purchaser, registers the quantity of a retrieval induction code sold and amount of money paid in the user management database 10, and sets the retrieval induction code, the key for making a secret key used for encrypting and decrypting and the state of the retrieval induction code (to be set to "unused") in the user management database 10, and issues the retrieval induction code and the key for making a secret key used for encrypting and decrypting. The purchaser sets the retrieval induction code and the key for making a secret key used for encrypting and decryting in the hardware module, and obtains said right for use N times (4).

In (5), said purchaser provides a non-purchaser with said right for use one time, and then the non-purchaser uses said right for use one time for the distributor of the software in (6). Then, the software distributor makes the dedicated software. At that time, the software distributor accesses the user management database 10 to confirm the retrieval induction code, obtains the key for making a secret key used for enciphering and decrypting from the user management database 10, registers the retrieval induction code as "in use" in the user management database 10, and distributes the dedicated software for use one time to a user who has not purchased a PC card in step (7). Since the software distributor has distributed the dedicated software, the state of the retrieval code in the user management database 10 is set to "already used."

A user who has purchased a PC card and a user who has not purchased a PC card perform cipher communications in step(8). When the seller who sells and manages PC cards returns a profit to the purchaser, the seller calculates the pay-back amount in step (9). At that time the seller obtains the ID of the purchaser, the state of the retrieval induction code, the quantity of the retrieval induction code purchased and the amount of money paid using the user management database 10. Then, the seller calculates the amount to be returned and the utilization points, and registers these in the user management database 10. When the seller actually returns a profit to the purchaser, the seller returns the profit to the purchaser based upon the ID of the purchaser, the amount to be returned and the utilization points which are obtained from the user management database.

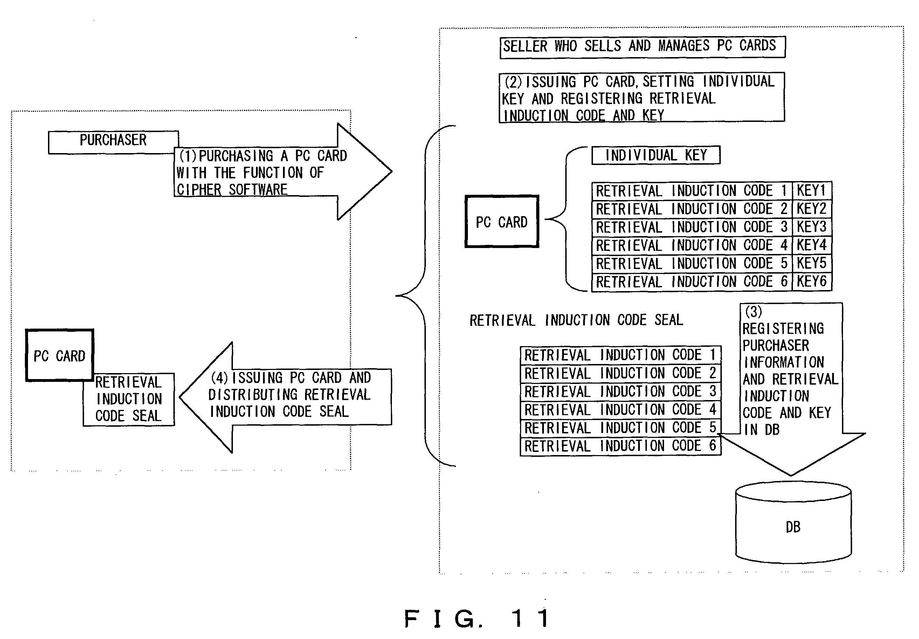

Fig. 11 is a diagram showing the sequence in which a user purchases a hardware module from the seller who sells and manages PC cards. Auser who wants to purchase a PC card informs the seller who sells and manages PC cards and the seller who sells the right to use cipher communications that he wants to purchase a PC card. Then, both the sellers issue the PC card, set an individual key, and register a key fit to the retrieval induction code in the PC card. An individual key is peculiar to each individual PC card, and it is managed by the seller who sells and manages PC cards. The individual key is used when a user who has purchased a PC card wants to communicate with the seller who sells and manages PC cards, or when a user who has purchased a PC card wants to have said seller send a secret key used for two purchasers to perform cipher communications with each other, the individual key is used to encrypt the secret key. Suppose that a user A and a user B are purchasers who have purchased PC cards, an individual key K1 is set to purchaser A, and an individual key K2 is set to purchaser B, and a key K3 is used for purchaser A to perform cipher communications with purchaser B. The keys that are made by encrypting the key K3 with the individual keys K1 and K2 are sent to purchaser A, and purchaser A transfers the key that is made by encrypting the key K3 with the individual key K2 to purchaser B, and purchaser A deciphers the key encrypted with the individual key K1. Purchaser B deciphers the key K3 with the individual key K2 and obtains the key K3. In this way purchaser A and purchaser B can perform cipher communications using the key K3. In addition, the individual keys are also used, for instance, for the seller who sells and manages PC cards to send information about a pay-back amount to the purchasers.

The seller who sells and manages PC cards issues a PC card in step (2) and registers the purchaser information, the retrieval induction code and the key fit to the retrieval induction code in the database in step (3). Then, said seller attaches a seal in which retrieval induction codes are listed to the PC and distributes the seal to the purchaser in step (4).

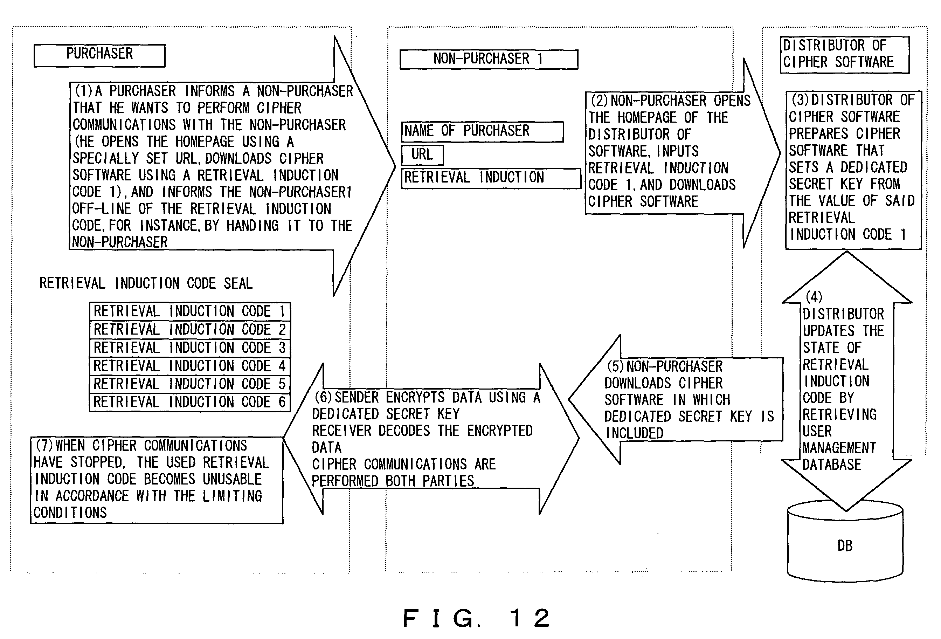

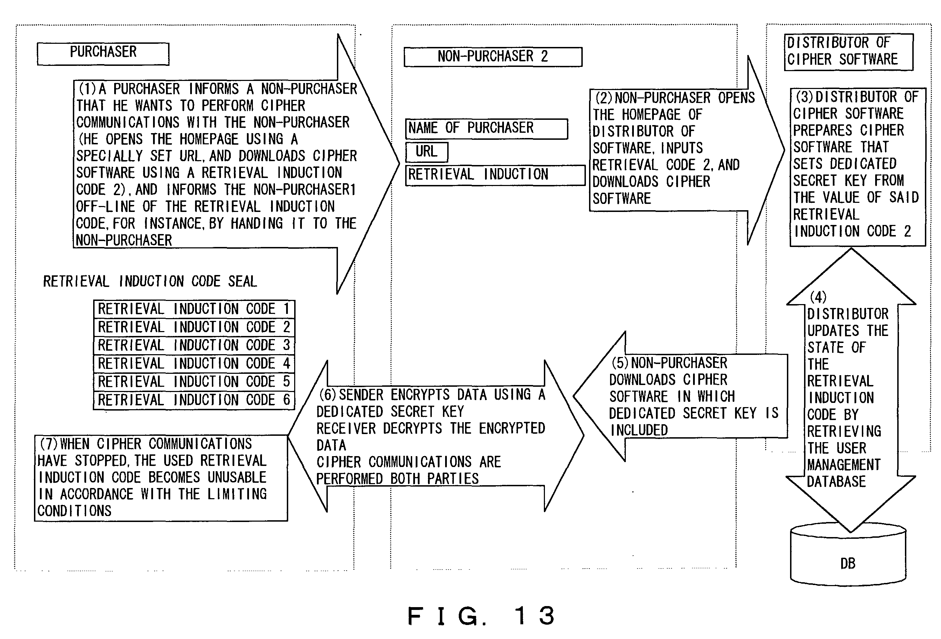

Fig. 12 and Fig. 13 are diagrams showing the procedure for starting communications.

First, a purchaser informs a non-purchaser 1 that he wants to perform cipher communications with the non-purchaser in step (1). Then, he accesses the homepage using a specially set URL, downloads cipher software, for instance, using a retrieval induction code 1, and informs the non-purchaser 1 off-line of the retrieval induction code. The non-purchaser 1 who has received the name of the purchaser who has purchased a PC card, the URL and the retrieval induction code opens the homepage of the distributor of the software, inputs the retrieval induction code 1, and downloads the cipher software in which he is interested in step (2).

In step (2), the distributor of cipher software prepares the cipher software that sets a dedicated secret key from the value of said retrieval induction code 1, and said distributor updates the state of the retrieval induction code by retrieving the user management database 10 in step (4). Then, in step (5), a non-purchaser 1 downloads the cipher software in which the dedicated secret key is included and installs it in his own machine. In step (6), he performs cipher communications that use the dedicated secret key with a purchaser who has purchased a PC card using this cipher software. In step (7), when the cipher communications stopped, the used retrieval induction code becomes unusable in accordance with the limiting conditions.

Fig. 13 is a diagram showing the procedure for a purchaser to perform for the second time cipher communications with a non-purchaser. Apurchaser informs a non-purchaser 2 that he wants to perform cipher communications with the non-purchaser in step (1). Then, the purchaser opens the homepage using a specially set URL, downloads cipher software using a retrieval induction code 2, and informs the non-purchaser 2 off-line of the retrieval induction code. When the non-purchaser 2 obtains the name of the purchaser, the URL and the retrieval induction code, he opens the homepage of the distributor of the software, inputs the value of the retrieval induction code 2 and gives instructions for downloading the cipher software he wants to download at in step (2). In step (3), the distributor of cipher software prepares the cipher software that sets a dedicated secret key from the value of said retrieval induction code 2, said distributor updates the state of the retrieval induction code in the user management database 10 in step (4). Then, in step (5), the non-purchaser 1 downloads the cipher software in which the dedicated secret key is included, and he performs secret communications (cipher communications) with a purchaser in step (6). In step (7), when the cipher communications stopped, the used retrieval induction code becomes unusable in accordance with the limiting conditions, as shown in step (7).

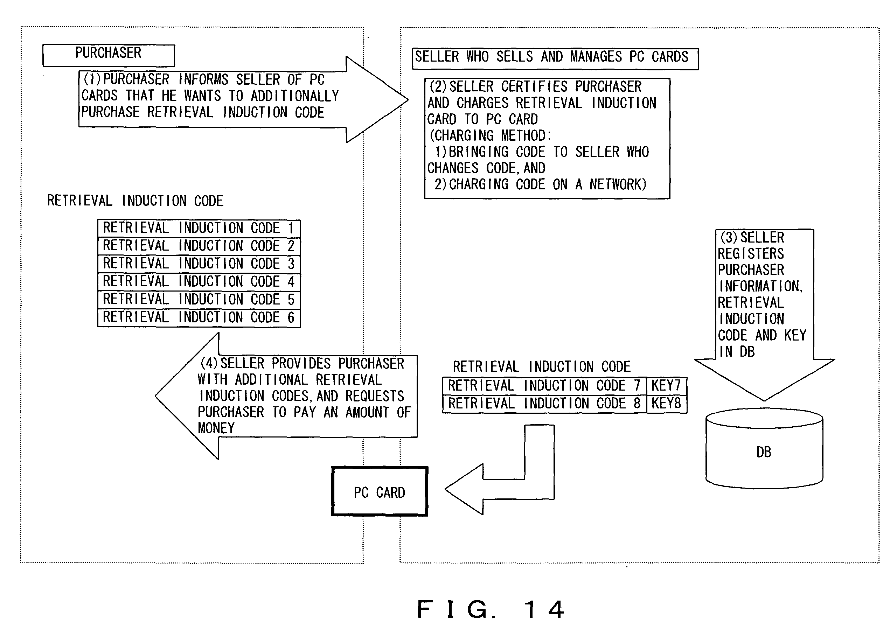

Fig. 14 is a diagram showing the procedure for supplementing a retrieval induction code.

A purchaser informs a seller who sells and manages PC cards that he wants to additionally purchase a retrieval induction code in step (1). The seller who sells and manages PC cards confirms the identity of the purchaser in step (2), and adds (charges) a retrieval induction code to the PC card. As the charging method, there is, for example, a method in which the purchaser brings the PC card to the seller and has the seller charge the PC card, or a method of charging the PC card on-line on a network. When the seller has finished charging the PC card, the seller registers the purchaser information, the retrieval induction code and the key in the database in step (3) and the PC card is returned to the purchaser. At that time, payment for the additional purchase of the retrieval induction code is requested to the purchaser in step (4).

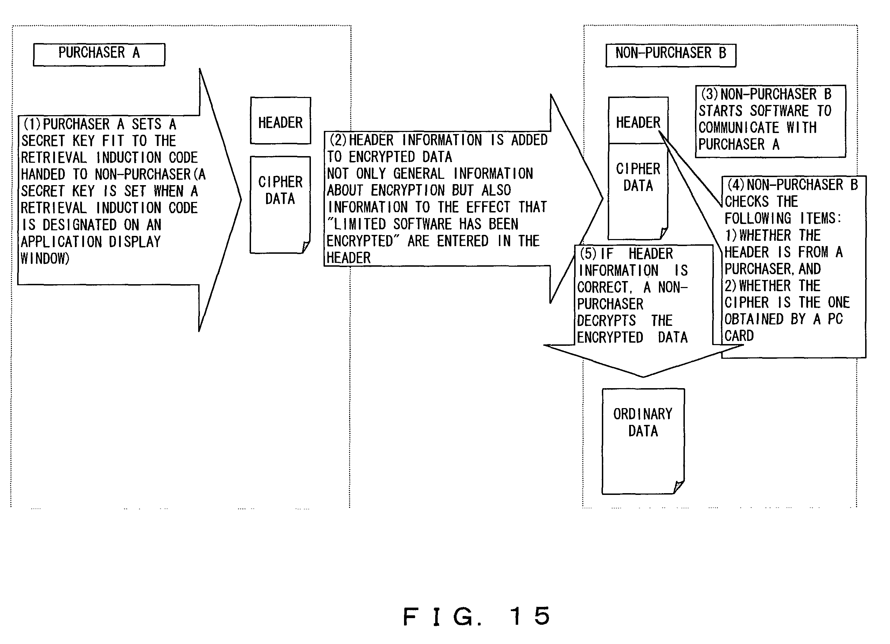

Fig. 15 is a diagram showing the certification process at the time a purchaser transmits data to a non-purchaser.

Purchaser A sets a secret key for the retrieval induction code handed over to a non-purchaser and encrypts data in step (1). As an example of constructing an interface, it is possible to construct an interface in such a way that a secret key is set when a retrieval induction code is designated on an application display window.

Non-purchaser B is informed of the encrypted data in step (2). Header information is added to the encrypted data. Not only general information about the encryption but also information to the effect that a PC card has been encrypted are entered in the header. Non-purchaser B starts the software to communicate with purchaser A in step (3), and in step (4), non-purchaser B checks the header of the cipher header received from purchaser A. The following items in the header contents are to be checked: whether the header is from the purchaser (step (1)), and whether the cipher is the one obtained by a PC card (step (2)). Then, if the header information is correct in step (5), the non-purchaser decrypts the encrypted data and obtains ordinary data.

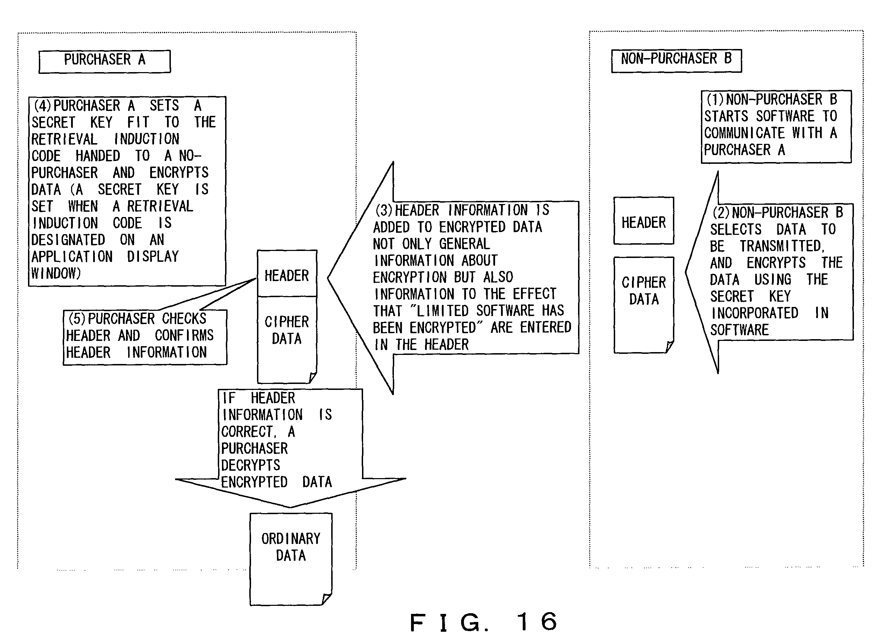

Fig. 16 is a diagram showing the certification process at the time a non-purchaser transmits data to a purchaser. First, non-purchaser B starts the software to communicate with purchaser A in step (1), and in step (2) he selects data to be transmitted, and encrypts the data using the secret key incorporated in the software that has been started in step (1) and transmits the encrypted data in step (3). Here, header information is added to the encrypted data. Not only general information about the encryption but also information to the effect that limited software has been encrypted are entered in the header.

The purchaser sets the secret key for the retrieval induction code transferred to the non-purchaser in step (4). An interface can be constructed in such a way that when a retrieval induction code is designated on a application window, the secret key is automatically set. In step (5), the purchaser checks the header and confirms the header information. If the header information is correct, the purchaser deciphers the encrypted data.

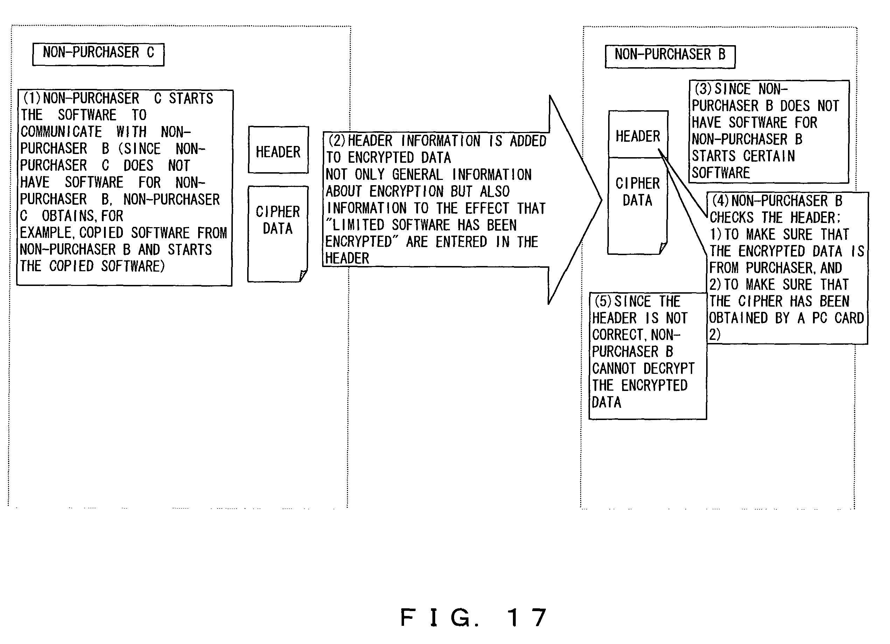

Fig. 17 is a diagram showing the certification process at the time non-purchaser C transmits data to non-purchaser B.

Non-purchaser C starts the software to communicate with non-purchaser B in step (1). Since non-purchaser C does not have software for non-purchaser B, non-purchaser C obtains, for example, copied software from non-purchaser B and starts the copied software. Then, non-purchaser C transmits the encrypted data to non-purchaser B in step (2). Header information is added to the encrypted data. Not only general information about the encryption but also information to the effect that a limited software has been encrypted are entered in the header. On the other hand, non-purchaser B starts certain software in step (3). When non-purchaser B receives the encrypted data from non-purchaser C, non-purchaser B checks the header in step (4), checks that the encrypted data is from a purchaser who has purchased a PC card 1), and checks that the cipher has been obtained by a PC card 2). In step (5), however, since the header is not correct, the cipher can neither be decrypted, nor can it be certified.

In this way, encrypted data to be used for cipher communications can be certified if it is used for the communications with a purchaser, but it cannot be certified if it is used for communications between a non-purchaser and a non-purchaser.

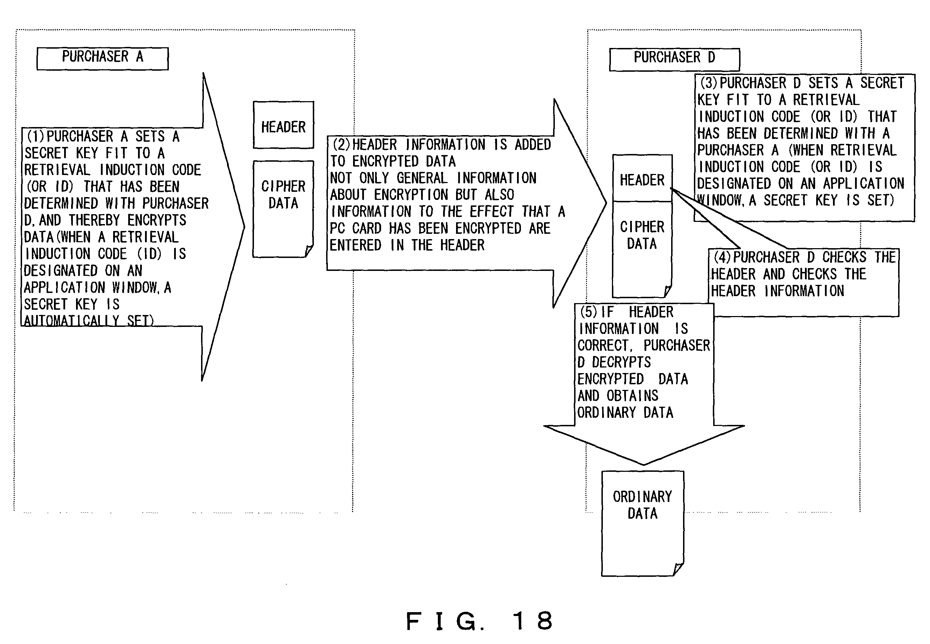

Fig. 18 is a diagram showing the certification process at the time communications are performed between both parties who have purchased PC cards.

First, purchaser A sets a secret key for the retrieval induction code (or ID) that has been determined with purchaser D in step (1), and thereby encrypts data. At that time, an interface can be constructed in such a way that when a retrieval induction code (ID) is designated in a application window, the secret key is automatically set.

Once the secret key is set, purchaser A encrypts the data and transmits the encrypted data, as shown in step (2). Header information is added to the encrypted data. Not only general information about the encryption but also information to the effect that a PC card has been encrypted are entered in the header.

Purchaser D sets a secret key for the retrieval induction code (or ID) that has been determined with purchaser A in step (3). At that time, when a retrieval induction code (or ID) is designated on a application window, the secret key is automatically set. When purchaser D receives the encrypted data, purchaser D checks the header and checks the header information in step (4).

If the header information is correct, he decrypts the encrypted data and obtains ordinary data in step (5).

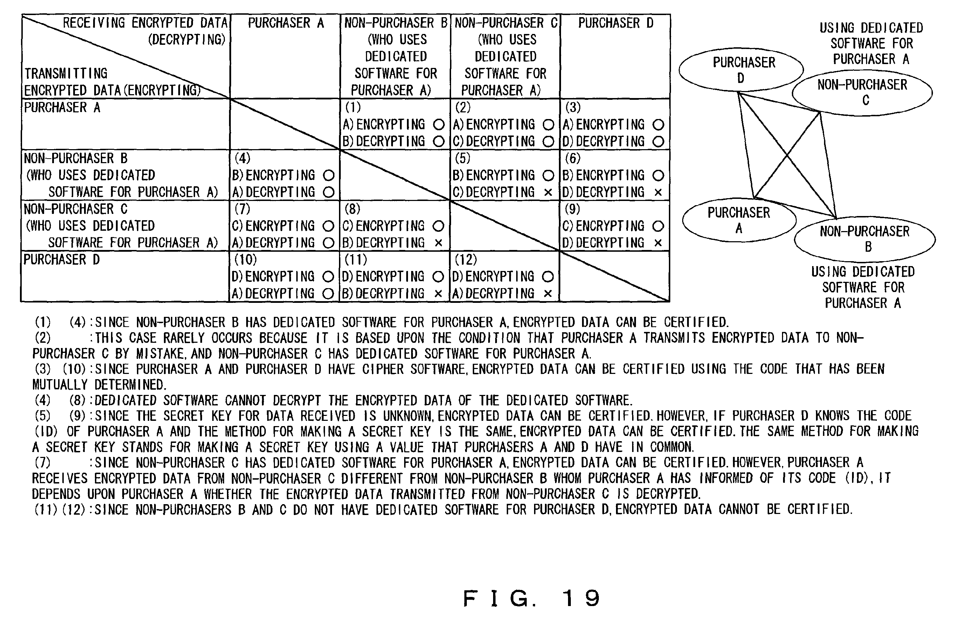

Fig. 19 is a diagram showing a summary of the certification of encrypted data.

In (1) and (4), since non-purchaser B has the dedicated software of purchaser A, the encrypted data can be certified.

In (2), purchaser A transmits the encrypted data to non-purchaser C by mistake, but the encrypted data can be certified under the condition that non-purchaser C has the dedicated software of purchaser A. In (5) and (10), since purchaser A and non-purchaser C have the cipher software, the encrypted data can be certified by using the retrieval induction code that has been determinedbybothparties. In (5) and (8), the dedicated software cannot decipher the encrypted data of the dedicated software. In (6) and (9), since the secret key of the transmitted data is unknown, certification of the encrypted data is impossible. However, if purchaser D knows the retrieval induction code (ID) of purchaser A and the method of making a secret key is the same, certification of the encrypted data is possible. The fact that the method of making a secret key is the same covers the case where a secret key is made using a value that purchaser A and purchaser D have in common.

In (7), since non-purchaser C has the dedicated software of purchaser A, the encrypted data can be certified. However, since the secret key for the transmitted data is from a purchaser who is different from non-purchaser B whom purchaser A informed of the retrieval induction code, whether the encrypted data is decrypted depends upon whether purchaser A can obtain the same retrieval induction code that non-purchaser C uses.

In (11) and (12), since there is no dedicated software for purchaser D, the encrypted data cannot be certified.

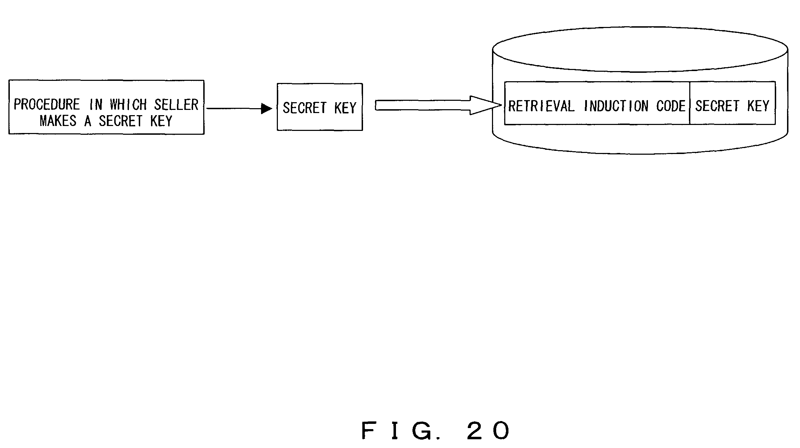

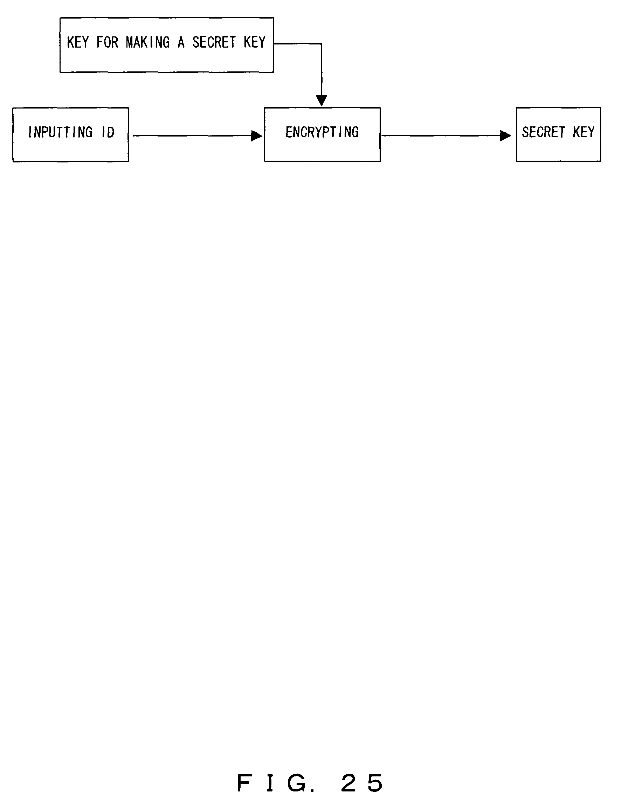

Fig. 20 to Fig. 25 are diagrams showing the method for making and using a secret key.

Examples of having a pair of retrieval induction codes and secret keys are shown in these figures. When two persons who communicate with each other determine a key to be used for cipher communications, the following process is not necessary, provided, however, that when they mutually determine an ID and mutually make a secret key, the key for making a secret key, which is explained below, has to have the same value.

First, a method of making a secret key is explained. A secret key is made by the seller who sells and manages PC cards, as described in Fig. 20. The secret key can also be made in a hardware module.

When a purchaser of a hardware module makes a request to purchase the right to use cipher communications, a secret key is made by the seller who sells and manages PC cards. The secret key that has been made is related to a retrieval induction code. The retrieval induction code is made, for instance, using an absolute time so that the same value does not result. After the retrieval induction code and the secret key are stored in the user management database 10, they are set in the hardware module.

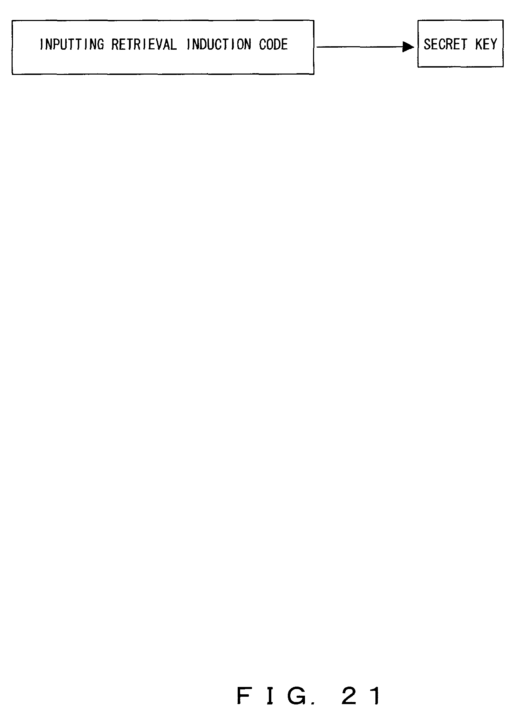

Fig. 21 is a diagram showing the method in which a purchaser and a non-purchaser use the embodiment of the present invention.

Cipher software is added to the dedicated software that has been downloaded by a non-purchaser. When a purchaser sets a retrieval induction code that has been transferred to the non-purchaser, a cipher key is automatically set.

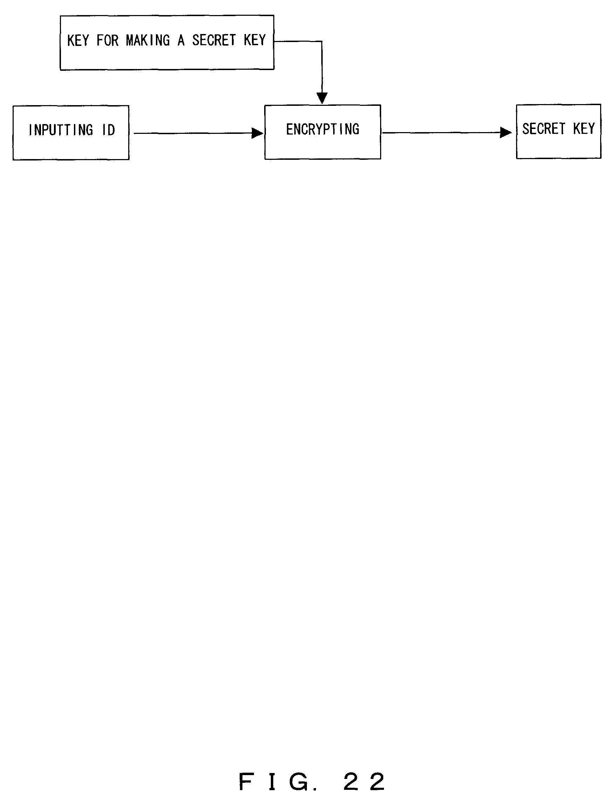

Fig. 22 is a diagram showing the method of making and using a secret key that is used by a purchaser and a non-purchaser.

The secret key is made in a hardware module. The secret key that is used between a purchaser of a hardware module and another purchaser of a hardware module is made in the hardware module of each purchaser. When a retrieval induction code (ID) that has been determined by both purchasers is inputted, the secret key is made by encrypting the retrieval induction code using the key for making a secret key. At that time, the key for making a cipher in each hardware module must be the same for both purchasers.

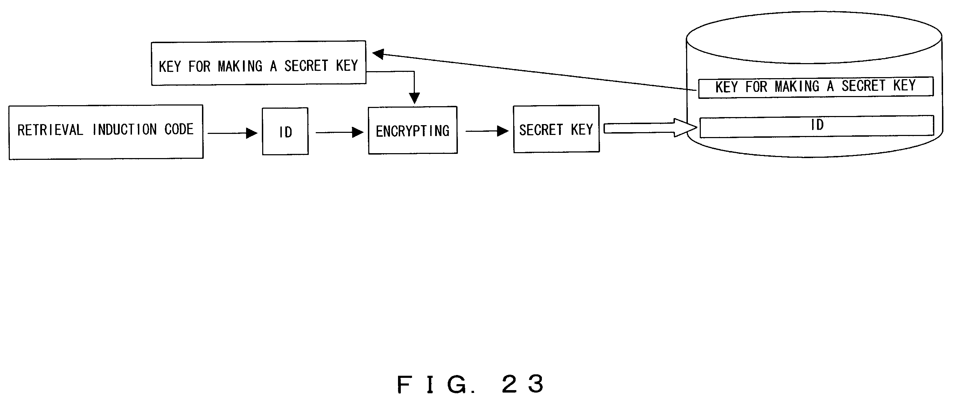

Fig. 23 is a diagram showing the method in which a plurality of purchasers and a non-purchaser make and use a secret key.

When a purchaser of a hardware module makes a request to purchase the right to use a hardware module, a secret key is made by the seller who sells and manages PC cards . At that time, the purchaser requests said seller to make a secret key by way of the method of making a secret key in the hardware module. The key for making a cipher is stored in the database when the purchaser purchases the hardware module. The secret key is made using the value made as a retrieval induction code as the ID.

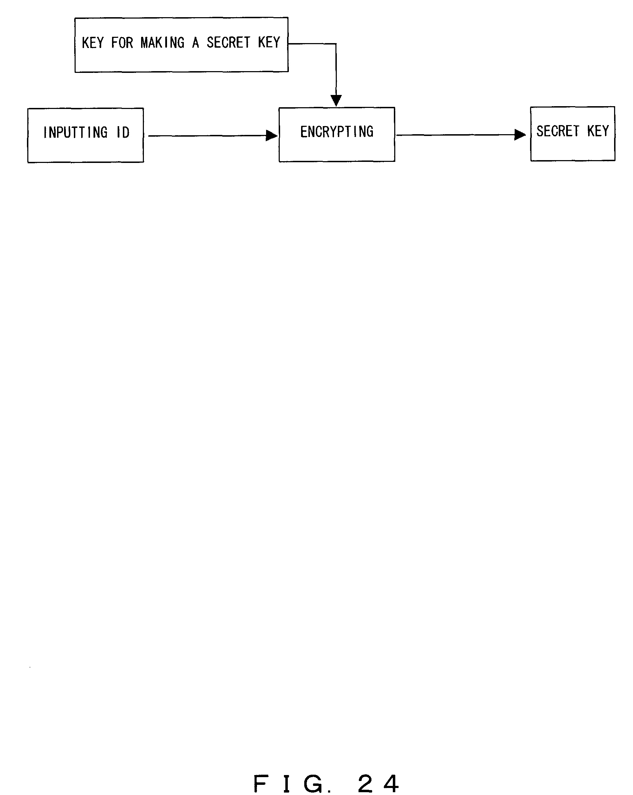

When the purchaser who has transferred a retrieval induction code (or ID) to a non-purchaser sets the retrieval induction code (or ID) that he transferred to the non-purchaser, a secret key is automatically set, as shown in Fig. 24. The method of making a secret key is obtained by encrypting the retrieval induction code (or ID) using the key for making the secret key, as mentioned above.

A purchaser who has not transferred the retrieval induction code (ID) to a non-purchaser has a purchaser who has transferred the retrieval induction code (ID) to a non-purchaser inform him of the ID. When the ID is inputted, the secret key is made. In this case, the key for making a cipher in the hardware module must be the same.

When downloading the dedicated software for cipher communications, the non-purchaser visits the web address of the other party whose software is downloaded based upon the URL of which the purchaser has informed the non-purchaser, and inputs the retrieval induction code. If the code is judged to be correct, the non-purchaser can download the dedicated software and begins downloading the dedicated software. Once the dedicated software has been downloaded, it cannot be downloaded again using the same retrieval induction code. Different dedicated software in which a different secret key is set can be downloaded only with a different retrieval induction code, so that once one piece of dedicated software has been downloaded, it cannot be downloaded again unless the right to copy it is established.

When charging a retrieval induction code to a PC card, a purchaser requests the seller who sells and manages PC cards to charge a retrieval induction code. When the code is charged to the PC card, a cipher key (or an ID) and the code are set in the PC card. There are two methods for charging: a purchaser brings a PC card to the seller and has the seller charge the code to the PC card, or a purchaser asks the seller to charge the code to the PC card on the WEB. In charging the code, a purchaser has to have his PC card certified. After his card is certificated, he designates the quantity of charge and charges the designated code to the PC card by the designated quantity. The purchaser is requested to pay for the charging of the code by the designated quantity.

A PC card has the function of encrypting and decrypting, as well as of verifying a signature. An individual key which cannot be changed and which is one secret key stored in a PC card, and a cipher key which is used for cipher communications with a unspecified party and for which a multiple number can be set are set in a PC card.

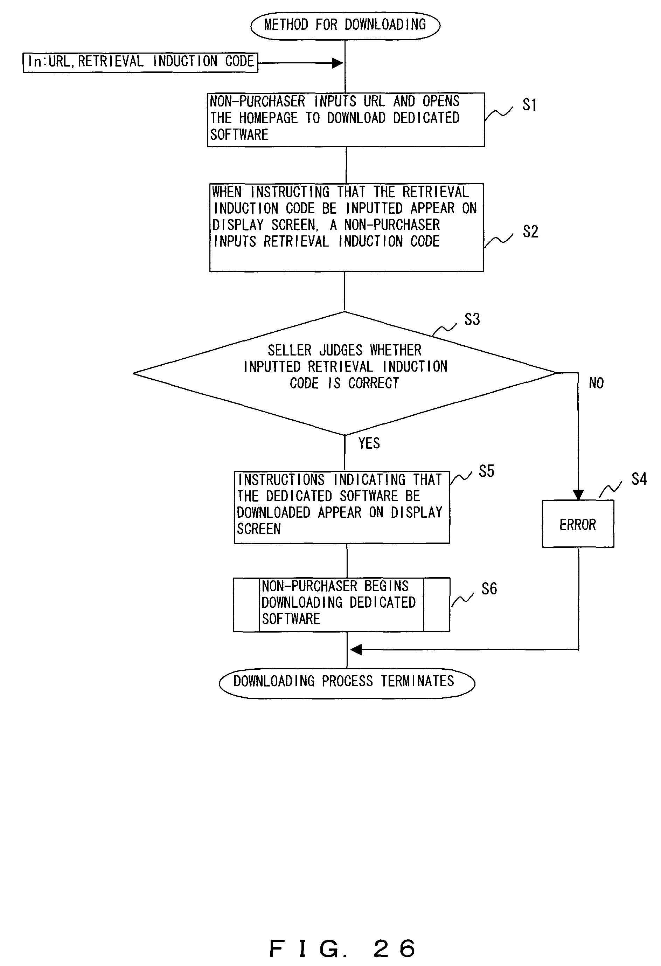

Fig. 26 is a flowchart showing the processing sequence at the time when a non-purchaser downloads dedicated software.

First, a non-purchaser inputs the URL and retrieval induction code from his terminal unit. Next, he opens the homepage to download the dedicated software using the URL in step S1. When such instructions indicating that a retrieval induction code be inputted appear on the display screen in step S2, he inputs the retrieval induction code. In step S3, the seller who sells and manages PC cards judges whether the inputted retrieval induction code is correct. If the code is not correct, an error appears on the display screen in step S4, and the downloading process terminates . If the code is judged to be correct in step S3, such instructions indicating that the dedicated software be downloaded appear on the display screen in step S5. In step S6, he begins downloading the dedicated software. When he has finished downloading the dedicated software, the downloading process terminates.

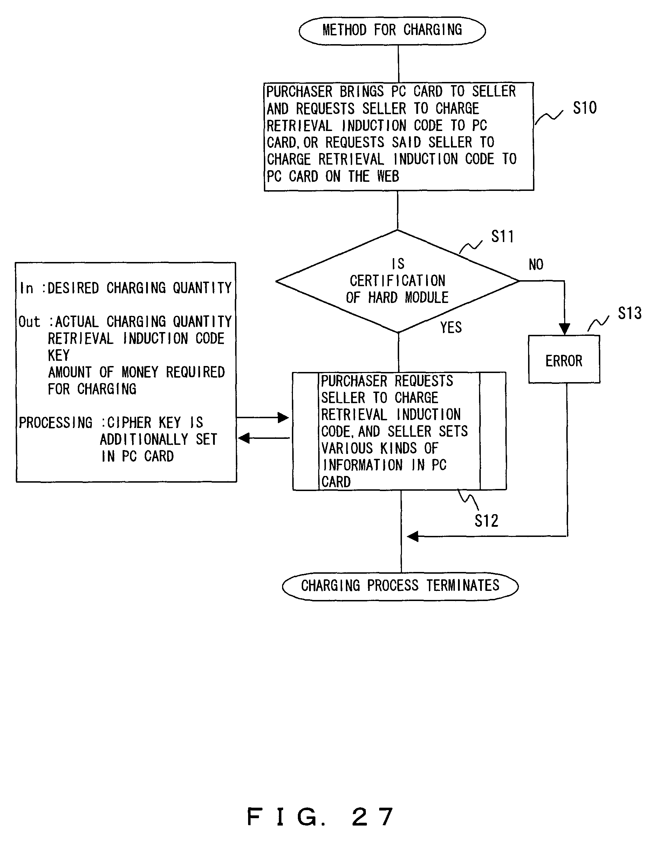

Fig. 27 is a flowchart showing the process in which a purchaser charges a retrieval induction code to a PC card.

First, a purchaser brings a PC card to the seller of PC cards in step S10, and asks the seller to charge a retrieval induction code to a PC card or asks said seller to charge a retrieval induction code to a PC card at a web address . In step S11, the purchaser has a hardware module (a PC card) certified. If he fails in the certification, an error appears on the display screen in step S13. If he succeeds in the certification in step S11, various kinds of information are set in the PC card in step S12, and the charging process terminates. The contents of the charging process are the actual charging quantity against a desired charging quantity, the retrieval induction code, the key, the amount of money to be paid for charging, and these contents are managed by the seller who sells and manages PC cards, and a cipher key is additionally set in the PC card.

This invention makes it possible to use secret and common software only with a specified party and to promote the use of software by performing communications via a network having enhanced secrecy.

If this invention is applied particularly to distributing a secret key for cipher communications, it is possible to perform secret communications safely with a specified party.

## Claims

1. A method in which a first user to whom a right to use a piece of software is granted distributes the software required for processing to a second user who processes the software, comprising the steps of:
distributing said software together with at least a code to identify said software with the first user; and
distributing to the second user the same software as said software identified by the code of which the first user has informed the second user.

2. The method according claim 1, wherein
the first user has to pay a reward in return for the distribution right of said software.

3. The method according claim 1 or 2, wherein
said software is the software for cipher communications.

4. The method according claim 3, wherein said code is used to make a secret key for cipher communications.

5. The method according claim 3, wherein
a secret key that is identified by said code is set in said software that the second user obtains.

6. The method according to any of the preceding claims, wherein
said software is software for a competition game.

7. The method according to any of the preceding claims, wherein
a plurality of said codes is distributed to the first user, and each code can be used only once.

8. The method according to claim 7, wherein
said code can additionally be distributed to the first user, and the first user has to pay for the additional purchase.

9. The method according to any of the preceding claims, wherein
the first user obtains said software by storing it in a PC card.

10. The method according to any of the preceding claims, wherein
the first user informs the second user off-line of said code.

11. The method according to any of the preceding claims, wherein
the second user obtains software on-line.

12. The method according to any of claims 1 to 10, wherein
the second user obtains said software off-line.

13. The method according to claim 2, or any of claims 3 to 12 as dependent on claim 2, wherein
the first user receives a reward by satisfying a plurality of specified conditions.

14. The method according to any of the preceding claims, wherein
when the second user communicates with a third user that is different from the first user, the second user receives said code from the first user, and sets a right to copy said software when obtaining said software, and transfers said copying right to the third user so that the third user can obtain the same software as said software, and the second user and the third user can communicate using said software.

15. The method according to any of claims 1 to 13, wherein
when the second user communicates with a third user that is different from the first user, the third user obtains the same kind of software as the first user; the first user and the third user can communicate with each other by obtaining said code from the first user; the first user informs the second user of said code so that the second user can download the software required for the communications and the first, second and third users can communicate with one another.

16. The method according to claim 15, wherein
the same kind of software owned by the third user as the software of the first user is the software for cipher communications that makes the same secret key using the same code.

17. The method according to claim 15, wherein
the first user arbitrarily sets an ID for said code, and the second user uses said ID instead of said code.

18. A computer program for carrying out a method according to any of the preceding claims.
